# EUROPÄISCHE PATENTSCHRIFT

(11) **EP 2 054 348 B1**
(45) Veröffentlichungstag und Bekanntmachung des Hinweises auf die Patenterteilung: **26.05.2010**
(21) Anmeldenummer: 07788352.8
(22) Anmeldetag: 10.08.2007
(51) Int. Cl.: C02F 1/52, C02F 3/34, C02F 9/00, C02F 101/20, C02F 101/10

(54) **VERFAHREN ZUR ENTFERNUNG VON SULFAT UND SCHWERMETALLEN AUS ABWASSER**
METHOD FOR REMOVING SULPHATE AND HEAVY METALS FROM WASTE WATER
PROCÉDÉ DESTINÉ À ÉLIMINER DES SULFATES ET DES MÉTAUX LOURDS DANS LES EAUX USÉES

(30) Priorität: 16.08.2006 DE 102006038207
(43) Veröffentlichungstag der Anmeldung: 06.05.2009
(73) Patentinhaber: SIEMENS AKTIENGESELLSCHAFT, 80333 München (DE)
(72) Erfinder: RIEBENSAHM, Michael, Santiago de Chile (CL)
(86) Internationale Anmeldenummer: PCT/EP2007/058294
(87) Internationale Veröffentlichungsnummer: WO 2008/019993

(56) Entgegenhaltungen:
- WO-A-2005/063632
- US-A- 5 587 079
- US-B1- 6 228 263

## Beschreibung

Die Erfindung betrifft ein Verfahren zur Aufbereitung von Sulfat und Schwermetalle enthaltenden Abwässern. Solche Abwässer fallen insbesondere im Bergbau bei Transport, Veredelung und Gewinnung von Metallerzen in großen Mengen an. Üblicherweise wird aus derartigen Abwässern Sulfat durch pH-Reduzierung und Zugabe eines Fällungshilfsmittels wie Kalkmilch als Kalziumsulfat ausgefällt und mit Hilfe von Sedimentationsbecken oder Filterstufen aus dem Abwasser entfernt. Aufgrund des Schwermetallgehaltes der Abwässer müssen die Sulfatschlämme als Sondermüll behandelt und mit hohem Aufwand in Spezialdeponien gelagert werden. Aus US 5,587,079 ist ein Verfahren bekannt, bei dem die Schwermetalle durch Einleiten von Schwefelwasserstoff ausgefällt und abgetrennt werden. Ein Teil des sulfathaltigen Wassers wird einem Bioreaktor zugeführt, in dem mit Hilfe von sulfatreduzierenden Bakterien Sulfat in H₂S umgewandelt wird, welches zur Schwermetallfällung eingesetzt wird. Überschüssiges Sulfat wird im Bioreaktor zu H₂S umgewandelt, wobei dieses zu Metallsulfiden umgesetzt wird. Nachteilig bei diesem Verfahren ist vor allen Dingen, dass die gesamte Abwassermenge durch den Bioreaktor geschleust werden muss, um das gesamte darin enthaltende Sulfat abzutrennen. Dies erfordert nicht nur einen sehr großen Bioreaktor mit entsprechendem Betriebs- und Serviceaufwand, sondern zusätzlich weitere Verfahrensschritte und entsprechende Apparaturen zur Umsetzung des erzeugten Schwefelwasserstoffs zu Metallsulfiden. Nachteilig ist weiterhin, dass bei großen Mengen an Sulfat eine entsprechend große Menge an Metallsulfiden gebildet wird, die zu den Metallsulfiden hinzukommen, die aus dem Schwermetalle enthaltenden Abwasser ausgefällt werden. Es fällt somit insgesamt eine sehr große Menge an Metallsulfiden an, was mangels Verwertungsmöglichkeiten zu erheblichen Beseitigungs- bzw. Deponieproblemen führt. So besteht beispielsweise die Gefahr, dass bei einem Kontakt mit saurem Wasser Schwefelwasserstoff aus den Sulfiden ausgetrieben wird.

Davon ausgehend ist es die Aufgabe der Erfindung, ein alternatives Aufbereitungsverfahren für Sulfat und Schwermetalle enthaltendes Abwasser vorzuschlagen, mit dem insbesondere die genannten Nachteile umgangen werden.

Diese Aufgabe wird nach Anspruch 1 durch ein Verfahren gelöst, bei dem in einer ersten Behandlungsstufe Schwefelwasserstoff durch das Abwasser geleitet wird. Dabei werden im Abwasser vorhandene Schwermetalle wie etwa Kupfer, Eisen oder Mangan als Sulfide ausgefällt und aus dem Abwasser entfernt, bevor in einer zweiten Behandlungsstufe aus dem Abwasser durch Zugabe eines Fällungshilfsmittels Kalziumsulfat ausgefällt wird. Diese Vorgehensweise hat den Vorteil, dass die Abtrennung des Sulfats aus dem Abwasser im Wesentlichen nur in einem einzigen Schritt, gegebenenfalls mit Nachschaltung einer Filterung zur Abtrennung von Restwasser, erfolgen kann. Dagegen erfordert das Abtrennen von Sulfat bei dem bekannten Verfahren mindestens zwei Schritte, nämlich das Durchschleusen praktisch der gesamten Abwassermenge durch den Bioreaktor und eine anschließende Umsetzung zu Metallsulfiden, was naturgemäß den Einsatz entsprechender Salze, also einen zusätzlichen Chemikalienaufwand erfordert. Im Gegensatz zu Metallsulfiden kann ausgefälltes Kalziumsulfat (Gips) in der Bauindustrie als Zuschlag zur Herstellung von Bausteinen oder als Bindemittel verwendet werden. Vorteilhaft ist weiterhin, dass bei dem vorgeschlagenen Verfahren nur ein relativ kleiner Bioreaktor erforderlich ist, da er ausschließlich zur Erzeugung der für die Ausfällung der im Abwasser enthaltenen Schwermetalle erforderlichen Schwefelwasserstoffmenge dient.

Die jeweils erforderliche Menge an Schwefelwasserstoff lässt sich auf einfache Weise durch die der dritten Behandlungsstufe zugeführte Menge an Kalziumsulfat steuern, nämlich so, dass stöchiometrische Anteile von Sulfiden und Schwermetallionen vorliegen. Um beispielsweise bei schwankenden Schwermetallgehalten den Analyseaufwand zu reduzieren, kann mit einem Überschuss an Schwefelwasserstoff, insbesondere von 20 Mol.% gegenüber der stöchiometrischen Menge gearbeitet werden. Im Falle geringerer Schwermetallgehalte nicht verbrauchter Schwefelwasserstoff kann beispielsweise zwischengespeichert werden, um bei Bedarf wieder verwendet zu werden.

Als Fällungshilfsmittel wird vorzugsweise Kalzium-Aluminat verwendet. Denkbar ist auch der Einsatz von Natrium-Aluminat.

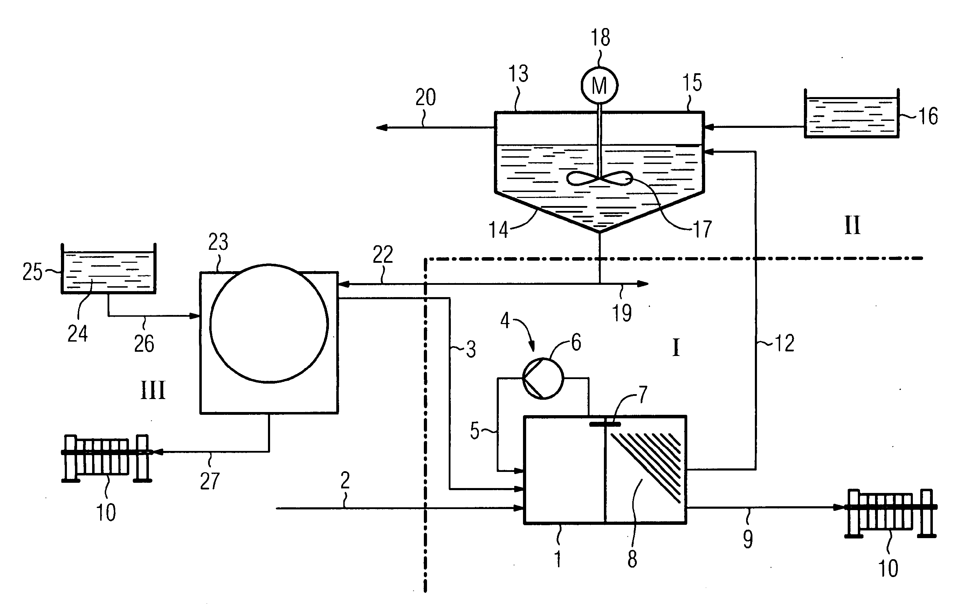

Die Erfindung wird nun unter Bezugnahme auf die beigefügte Zeichnung, die ein Flussdiagramm eines erfindungsgemäßen Verfahrens zeigt, näher erläutert.

Für das in Rede stehende Abwasser-Behandlungsverfahren sind im Wesentlichen insgesamt drei Behandlungsstufen erforderlich, die in der Abbildung mit I-III gekennzeichnet sind. Ein zu reinigendes Abwasser wird zunächst der Behandlungsstufe I zugeführt. Diese umfasst einen Reaktor 1 zur Behandlung des Abwassers mit Schwefelwasserstoff. Über eine Leitung 2 wird der Reaktor 1 mit Abwasser beschickt. Über eine Leitung 3 wird dem Reaktor 1 Schwefelwasserstoff an einer in dessen Bodenbereich liegenden Stelle zugeführt. Um den Schwefelwasserstoff möglichst fein im Abwasser zu verteilen ist eine Umwälzeinrichtung vorhanden. Diese-umfasst eine im Deckelbereich des Reaktors abzweigende und an einer tieferen Stelle in den Reaktor 1 einmündende Umwälzleitung 5, in der eine Pumpe 6 angeordnet ist. Mit dieser wird das Abwasser mit hoher Geschwindigkeit im Kreislauf geführt, wobei innerhalb des Reaktors 1 starke, eine Durchmischung der Reaktanden fördernde Turbulenzen auftreten. Durch Einleiten von Schwefelwasserstoff gebildete Schwermetallsulfide werden mit der Strömung des Abwassers nach oben geführt und gelangen über einen im deckelnahen Bereich angeordneten Auslass 7 in eine dem Reaktor 1 nachgeordnete Filtereinheit 8. Hier werden die Schwermetallsulfide aus dem Abwasser herausgefiltert. Im Bodenbereich der Filtereinheit 8 wird Schwermetallsulfid enthaltender Primärschlamm über eine Leitung 9 abgezogen und einer Filtration beispielsweise mit Hilfe einer Plattenfilterpresse 10 unterzogen. Über eine Leitung 12 wird der Filtereinheit 8 Filtrat bzw. von Schwermetallsulfiden gereinigtes Abwasser entnommen und der Behandlungsstufe II zugeführt.

Die Behandlungsstufe II umfasst einen Absetzbehälter 13 mit einem trichter- oder keilförmig ausgebildeten Boden 14. An einer der Oberseite 15 des Absetzbehälters 13 nahen Position mündet die von der Filtereinheit 8 kommende Leitung 12 in den Absetzbehälter 13. Aus einem Vorratsbehälter 16 wird Kalzium-Aluminat als Fällungshilfsmittel in den Absetzbehälter 13 eingeleitet. Zur Beschleunigung des Fällungsvorganges ist im Absetzbehälter 13 eine Rühreinrichtung 17 vorhanden, die über einen Motor 18 angetrieben ist. Das ausgefällte Kalziumsulfat sammelt sich bei stillstehender Rühreinrichtung 17 am Boden 14 des Absatzbehälters 13 und wird über eine Leitung 19 als Sekundärschlamm abgezogen, während von Sulfat im wesentlichen befreites Abwasser über eine nahe der Oberseite 15 angeordnete Leitung 20 entnommen wird. Über eine von der Leitung 19 abzweigende Leitung 22 wird ein Teil des Sekundärschlamms der Behandlungsstufe III zugeführt.

Die Behandlungsstufe III wird im Wesentlichen von einem Bioreaktor 23 gebildet, in dem mit Hilfe von sulfatreduzierenden Bakterien in an sich bekannter Weise Sulfat in Schwefelwasserstoff umgewandelt wird. Damit diese Umwandlung stattfinden kann, werden im Bioreaktor 23 anoxische Bedingungen eingehalten. Die Umsetzung des Sulfats zu Schwelfelswasserstoff erfordert einen Elektronendonator bzw. eine Kohlenstoffquelle. Diese wird in Form von organisch belastetem Abwasser 24 über einen Vorratsbehälter 25 und eine Leitung 26 dem Bioreaktor 23 zugeführt. Als Reaktionsprodukte der mikrobiologischen Stoffwechselvorgänge entstehen Schwefelwasserstoff und Kohlendioxid. Mit diesem Gasgemisch wird über die Leitung 3 der Reaktor 1 der Behandlungsstufe I beschickt. Durch die Umsetzungen im Bioreaktor 23 werden Feststoffe vor allen Dingen organischer Natur gebildet, die über eine im bodennahen Bereich des Bioreaktors 23 mündende Leitung 27 einer Filtriereinheit, etwa ebenfalls einer Filterplatte 10, zugeführt werden. Das Filtrat kann gegebenenfalls in den Bioreaktor 23 zurückgeleitet werden.

## Patentansprüche

1. Verfahren zur Entfernung von Sulfat und Schwermetallen aus Abwasser, mit folgenden Schritten:
a) in einer ersten Behandlungsstufe (I) wird Schwefelwasserstoff durch das Abwasser geleitet, wobei im Abwasser vorhandene Schwermetalle als Sulfide ausgefällt und aus dem Abwasser entfernt werden,
b) in einer zweiten Behandlungsstufe (II) wird aus dem Abwasser durch Zugabe eines Fällungshilfsmittels Kalziumsulfat ausgefällt,
c) das Kalziumsulfat wird aus der zweiten Behandlungsstufe (II) entfernt und ein Teil davon einer dritten Behandlungsstufe (III) zugeführt, in der mit Hilfe von sulfatreduzierenden Bakterien Sulfat in Schwefelwasserstoff umgewandelt wird,
d) in der dritten Behandlungsstufe (III) gebildeter Schwefelwasserstoff wird der ersten Behandlungsstufe (I) zugeführt.

2. Verfahren nach Anspruch 1, bei dem als Fällungshilfsmittel Kalzium-Aluminat verwendet wird.

3. Verfahren nach Anspruch 1 oder 2, bei der der dritten Behandlungsstufe (III) so viel Kalziumsulfat zugeführt wird, dass zumindest eine zur stöchiometrischen Umsetzung der im Abwasser enthaltenen Schwermetalle erforderliche Menge an Schwefelwasserstoff gebildet wird.

4. Verfahren nach Anspruch 3, bei dem mit einem Schwefelwasserstoff-Überschuss von 20 Mol.% gearbeitet wird.

## Claims

1. Method of removing sulphate and heavy metals from waste water having the following steps:
a) in a first treatment stage (I), hydrogen sulphide is passed through the waste water, wherein heavy metals present in the waste water are precipitated out as sulphides and removed from the waste water,
b) in a second treatment stage (II), calcium sulphate is precipitated out of the waste water by addition of a precipitant,
c) the calcium sulphate is removed from the second treatment stage (II) and a part thereof is fed to a third treatment stage (III) in which sulphate is converted to hydrogen sulphide with the aid of sulphate-reducing bacteria,
d) hydrogen sulphide which is formed in the third treatment stage (III) is fed to the first treatment stage (I) .

2. Method according to Claim 1, in which the precipitant used is calcium aluminate.

3. Method according to Claim 1 or 2, in which calcium sulphate is fed to the third treatment stage (III) until at least an amount of hydrogen sulphide required for the stoichiometric reaction of the heavy metals contained in the waste water is formed.

4. Method according to Claim 3, in which a hydrogen sulphide excess of 20 mol% is employed.

## Revendications

1. Procédé pour éliminer du sulfate et des métaux lourds d'eaux usées, comprenant les stades suivantes :
a) dans un premier stade ( I ) de traitement, on fait passer de l'hydrogène sulfuré dans les eaux usées, des métaux lourds dans les eaux usées précipitant sous forme de sulfures et étant éliminés des eaux usées,
b) dans un deuxième stade ( II ) de traitement, on précipite du sulfate de calcium dans les eaux usées par addition d'un adjuvant de précipitation,
c) on élimine le sulfate de calcium du deuxième stade ( II ) de traitement et on en envoie une partie à un troisième stade ( III ) de traitement, dans lequel on transforme du sulfate en hydrogène sulfuré à l'aide de bactéries réduisant le sulfate,
d) on envoie l'hydrogène sulfuré formé dans le troisième stade ( III ) de traitement au premier stade ( I ) de traitement.

2. Procédé suivant la revendication 1, dans lequel on utilise de l'aluminate de calcium comme adjuvant de précipitation.

3. Procédé suivant la revendication 1 ou 2, dans lequel on envoie au troisième stade ( III ) de traitement tellement de sulfate de calcium qu'il se forme au moins une quantité d'hydrogène sulfuré nécessaire pour la réaction stoechiométrique des métaux lourds contenus dans les eaux usées.

4. Procédé suivant la revendication 3, dans lequel on travaille avec un excès d'hydrogène sulfuré de 20 % en mole.
